# EUROPÄISCHE PATENTSCHRIFT

(11) **EP 2 042 765 B1**
(45) Veröffentlichungstag und Bekanntmachung des Hinweises auf die Patenterteilung: **03.07.2013**
(21) Anmeldenummer: 08015514.6
(22) Anmeldetag: 03.09.2008
(51) Int. Cl.: F16D 13/75

(54) **Kupplung mit Nachstelleinrichtung**
Coupling with adjustment device
Embrayage doté d'un dispositif de réglage

(30) Priorität: 27.09.2007 DE 102007046241
(43) Veröffentlichungstag der Anmeldung: 01.04.2009
(73) Patentinhaber: Schaeffler Technologies AG & Co. KG, 91074 Herzogenaurach (DE)
(72) Erfinder: Becht, Marco, 77815 Bühl (DE); Greb, Peter, 77815 Bühl (DE)

(56) Entgegenhaltungen:
- EP-A1- 0 699 844
- EP-A1- 1 832 771
- EP-A2- 0 199 623
- EP-A2- 1 724 484
- DE-A1-102004 009 832
- DE-A1-102005 003 505
- DE-C1- 19 736 557

## Beschreibung

Die Erfindung betrifft eine von einer Betätigungsvorrichtung zugedrückte Reibungskupplung mit einer Nachstelleinrichtung zur Kompensation eines Fehlabstandes zwischen den Reibkontaktflächen.

Derartige Reibungskupplungen sind beispielsweise aus der DE 10 2005 003 505 A1 bekannt. Im Allgemeinen werden derartige Fehlabstände über die Betriebszeit der Reibungskupplung durch Verschleiß der Reibbeläge der Kupplungsscheibe und Setzvorgänge der Belagfederung hervorgerufen. Verschleißkompensation erfolgt zweckmäßigerweise durch einen Ausgleich des Fehlabstands, indem der ideale axiale Abstand der Reibflächen der Kupplung zueinander durch über den Umfang wirksame Rampen-Gegenrampensysteme so gegeneinander verdreht werden, dass sich zwischen einem Betätigungshebel, der gegebenenfalls durch eine Tellerfeder gebildet sein kann, und einem Anschlag am Kupplungsdeckel die gewünschten Abstandsverhältnisse wieder einstellen.

Bei einer Kompensation des Fehlabstands mittels Überweg wird die Reibungskupplung durch eine Betätigung über den geschlossenen oder geöffneten Zustand hinaus betätigt, indem der Betätigungshebel vom Betätigungssystem entsprechend über diesen Zustand hinaus gedrückt oder entspannt wird. Dabei hebt der Betätigungshebel von einer das Rampen-/Gegenrampensystem sperrenden Einrichtung ab, so dass dieses - meistens unterstützt von einer entsprechenden Kraftspeichereinrichtung - durch Relativverdrehung der Rampen entgegen der Gegenrampen den Fehlabstand ausgleichen kann. Das Maß der Nachstellung hängt dabei wesentlich von der Stellung des Betätigungshebels ab. Für diese Art der Nachstellung durch Erzeugen eines Überwegs haben sich Nachstelleinrichtungen besonders vorteilhaft erwiesen, zwischen dem Rampen-/Gegenrampensystem und dem Betätigungshebel eine Vorrichtung vorzusehen, mittels derer eine Nachstellung nicht unter Überbrückung des gesamten Überwegs erfolgt sondern portionsweise nachgestellt wird. Hierzu kann eine sogenannte Antriebsfeder-Schneckenrad-Vorrichtung verwendet werden, bei der der Überweg und der daraus resultierende zusätzliche axiale Hub des Einrücklagers in Öffnungsrichtung und die wiederum daraus resultierende Verkippung des Betätigungshebels zu einem tangentialen Weg einer an der Antriebsfeder vorgesehenen Zunge führt, die dadurch einen Zahn des Schneckenrades überspringt. Beim nächsten Einrückvorgang verdreht das Schneckenrad das Rampen-/ Gegenrampensystem um einen vorgegebenen Betrag. Ist der Verschleiß größer als der durch den Betrag verstellte Einrückweg, wird die Nachstellung bei den nächsten Einrückvorgängen solange wiederholt, bis der Verschleiß ausgeglichen ist.

Typische Betätigungssysteme erfüllen die Funktion einer Axialverlagerung des Betätigungshebels, indem diese in Abhängigkeit vom gewünschten Grad des Reibschlusses zwischen Kupplungsreibflächen und abtriebsseitigen Reibbelägen beispielsweise einer Kupplungsscheibe einen definierten Einrückweg vorgeben. Die DE 10 2004 009 832 A1 offenbart hierzu ein Betätigungssystem als Hebelsystem, bei dem ein Hebel über ein Wälzlager auf den Betätigungshebel einwirkt.

Aufgabe der Erfindung ist, eine Reibungskupplung der genannten Gattung in der Weise zu verbessern, dass die Reproduzierbarkeit der Nachstellung weiter verbessert werden kann. Eine Verbesserung soll ohne hohe Kosten vorgenommen werden können und an die bestehenden Betätigungssysteme anpassbar sein. Insbesondere soll eine sichere und schwingungstolerante Verstellung des Überwegs vorgeschlagen werden.

Die Aufgabe wird durch eine Reibungskupplung für ein Kraftfahrzeug gelöst, die in kraftfreiem Zustand ausgerückt und durch Axialverlagerung eines von einer Betätigungseinrichtung mittels eines Hebels betätigten Betätigungshebels eingerückt wird und die bei einem über den kraftfreien Zustand hinaus bewegten Überweg einen durch Verschleiß hervorgerufenen axialen Fehlabstand zwischen in der Reibungskupplung vorgesehenen Reibflächen nachstellt. Erfindungsgemäß gibt hierzu ein an der Betätigungseinrichtung vorgesehener schaltbarer Anschlag einen Überweg des Hebels frei, wenn ein erfasster Einrückweg des Hebels ein vorgegebenes Maß überschreitet. Dieses Maß kann beispielsweise so festgelegt werden, dass es einem Verschleiß entspricht, bei dem die Reibungskupplung nachgestellt werden soll. Dabei nimmt der Hebel im Verlauf einer Betätigung ein mit einer Rampe versehenes, ein Unterlegstück für den Hebel steuerndes Bauteil mit. Dieses steuernde Bauteil wirkt über die Rampe auf ein gesteuertes, mit einer Gegenrampe versehenes, das Unterlegstück enthaltende Bauteil in der Weise ein, dass dieses senkrecht zur vom Hebel beschriebenen Axialbewegung bewegt wird. Je nach Ausgestaltung kann die Bewegung translatorisch oder rotatorisch sein und schwenkt das Unterlegstück, das unter normalen Betriebszuständen der Reibungskupplung als Endanschlag für den Kupplungsweg in Ausrückrichtung dient, aus, so dass die Reibungskupplung einen Überweg beschreitet, der die Nachstellung einleitet. Es hat sich dabei als vorteilhaft gezeigt, wenn das steuernde Bauteil entlang der Axialbewegung biegeweich aufgenommen ist. Insbesondere im Zusammenhang mit der federbelasteten Anlage oder Verrastung von Teilen aufeinander ist eine Ausrichtung der Biegeweichheit in dieselbe Richtung vorteilhaft für eine Stabilisierung der Kontakte und Formschlüsse bei Schwingungseinwirkung, wie sie beispielsweise in Antriebssträngen von Kraftfahrzeugen, in denen die vorgeschlagene Reibungskupplung zum Einsatz kommt, auftreten können.

In vorteilhafter Weise kann das steuernde Bauteil durch einen entlang der Axialbewegung der Betätigungseinrichtung der Reibungskupplung verlagerbaren Schlitten gebildet sein, der auf von einem senkrecht zur Axialbewegung elastischen Führungselement geführt wird. Ein derartiges Führungselement kann durch eine Blattfeder gebildet sein, die ortsfest beispielsweise an der Betätigungseinrichtung, am Getriebegehäuse oder an der Kupplungsglocke ortsfest aufgenommen sein kann. Unter dem Begriff ortsfest ist in der gesamten Offenbarung dieses Dokuments die feste Verbindung zu Gehäuseteilen des Antriebsstrangs zu verstehen. Dabei kann der Schlitten mittels eines Energiespeichers, beispielsweise einer Druckfeder, gegen den Hebel zur Betätigung der Reibungskupplung oder ein mit diesem verbundenen Bauteil verspannt sein. Bei einer Verlagerung durch den Hebel kann der Schlitten mittels sich gegenüberstehender Rampen das gesteuerte Bauteil nach radial außen verlagern. Dieses gesteuerte Bauteil kann das Unterlegstück selbst sein, mit dem Unterlegstück verbunden sein oder dieses so beaufschlagen, dass es abhängig von der Bewegung des gesteuerten Bauteils bewegt wird. In vorteilhafter Weise kann vorgesehen sein, dass das gesteuerte Bauteil mittels einer Gegenrampe mit der Rampe des Schlittens in Kontakt tritt, wobei der Kontakt der beiden Teile aufeinander unter Vorspannung erfolgt. Das Rastierelement sieht bei Erreichen einer Nachstellposition einen Formschluss mit dem Schlitten vor, so dass bei einem Zurückfahren des Hebels in Öffnungsposition der Reibungskupplung das Unterlegstück nicht mehr in Richtung Hebel bewegt wird und somit erst ein Überweg entstehen kann. In vorteilhafter Weise wird das Rastierelement mittels einer der Rampe zur Beaufschlagung des gesteuerten Bauteils bevorzugt gegenüber liegenden Rampe beaufschlagt. Bei einer Mitnahme des Schlittens in Betätigungsrichtung des Hebels werden beide Teile, gesteuertes Bauteil und Rastierele-ment nach radial außen verlagert beziehungsweise im Falle des Rastierelements nach außen gebogen, da dieses an einem Ende ortsfest angebunden ist. Das Rastierelement weist eine Rastierung, beispielsweise eine Rastiernase auf, in die der Schlitten bei ausreichender Verlagerung im Nachstellfall formschlüssig einrastet.

Zur Aufhebung des Formschlusses zwischen dem Rastierelement und dem Schlitten zum Abschluss einer Nachstellung ist ein Rückstellelement vorgesehen, das vom Hebel in der Überwegposition gesteuert wird. Hierzu kann das Rückstellelement begrenzt verlagerbar und begrenzt verschwenkbar ortsfest aufgenommen sein, indem beispielsweise ein Dorn in dieser Weise ortsfest aufgenommen ist und das Führungselement und das Rastierelement übergreift und das Rückstellelement aufnimmt. Dabei ist das Rückstellelement mit dem Schlitten in axiale Bewegungsrichtung des Schlittens mittels eines Energiespeichers, beispielsweise einer Druckfeder, verspannt. Da der Schlitten vom Hebel mitgenommen wird, wird der Schlitten von dem Energiespeicher auch mit dem Hebel verspannt. Zur Herstellung einer Verbindung mit dem Hebel weist das Rückstellelement zwei in Richtung des Dorns ausgerichtete Arme auf, die an ihrem unteren Ende abgewinkelt sind und den Hebel hintergreifen. Im Nachstellfall taucht das Rückstellelement durch den Hebel beaufschlagt zwischen Führungselement und Rastelement ein, spreizt diese und löst den Formschluss zwischen Schlitten und Rastierelement, so dass der Schlitten vom Energiespeicher vorgespannt in Anlage zum Hebel zurück, wodurch das Unterlegstück in seine Ursprungsposition unter dem Hebel zurückkehrt.

Die Erfindung wird anhand der Figuren 1 bis 6 näher erläutert. Dabei zeigen:
- Figur 1: eine schematische Darstellung einer Reibungskupplung mit einer Nachstelleinrichtung,
- Figuren 2 und 3: ein Ausgestaltungsbeispiel einer Betätigungseinrichtung in zwei Ansichten,
- Figur 4: ein Detail eines schaltbaren Anschlags aus Figur 3 in Ansicht,
- Figur 5: das in Figur 4 gezeigte Detail in einer weiteren Ansicht
und
- Figur 6: einen Schnitt durch den in den Figuren 4 und 5 dargestellten geschalteten Anschlag.

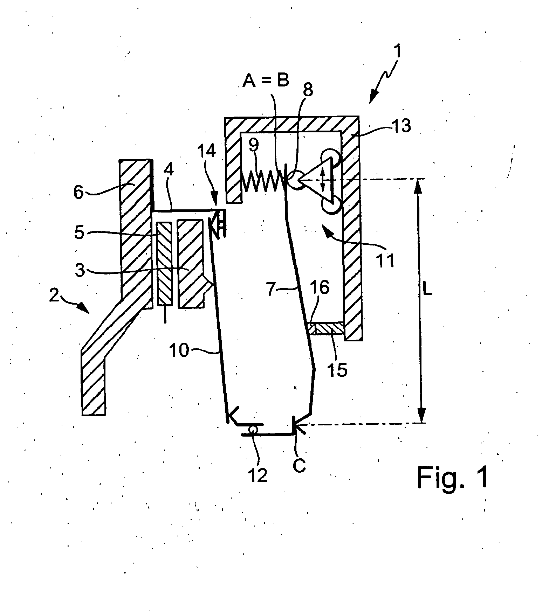

Die Figur 1 zeigt in schematischer Darstellung ein Kupplungssystem 1 mit einer Reibungs-kupplung 2. Die Reibungskupplung 2 besteht im Wesentlichen aus einer Gegendruckplatte 6, einer Kupplungsscheibe 5, einer Druckplatte 3, einem Kupplungsdeckel 4 und einem Betätigungshebel 10, der hier als Tellerfeder ausgebildet ist. Bei der in Figur 1 beispielsweise dargestellten Reibungskupplung 2 handelt es sich um eine sogenannte zugedrückte Kupplung, die im kraftfreien Zustand geöffnet ist und bei Beaufschlagung des Betätigungshebels 10 mit einer vom Ausrücker vorgegebenen Kraft durch Axialverlagerung des Betätigungshebels 10 geschlossen wird, indem die Reibflächen der Kupplungsscheibe 5 einerseits und die Reibflächen der Druckplatte 3 und der Gegendruckplatte 5 in Reibeingriff gebracht werden. Dementsprechend handelt es sich bei dem dargestellten Ausführungsbeispiel bei der Kupplungsbetätigungsvorrichtung um einen sogenannten Hebeleinrücker 11 und das Lager am Betätigungshebel 10 ist ein Einrücklager 12. Es versteht sich, dass bei sogenannten aufgedrückten Kupplungen eine entsprechende Verwendung der Kupplungsbetätigungsvorrichtung als Hebelausrücker in ähnlicher Weise vorteilhaft sein kann und daher von der Offenbarung ebenfalls umfasst ist.

Der Hebeleinrücker für die Reibungskupplung 2 besteht im Wesentlichen aus einem Hebelsystem, welches gehäusefest an einer Abstützung 13 angeordnet ist. Der Hebeleinrücker wirkt mittels eines Hebels 7 mit einer Hebellänge L auf das Einrücklager 12, welches um eine hier nicht dargestellte Getriebeeingangswelle herum angeordnet ist, und als Axiallager die Drehzahlunterschiede zwischen der mit Motordrehzahl drehenden Reibungskupplung 2 und dem gehäusefesten Hebel 7 ausgleicht.

In der Figur 1 liegen die Federeinrichtung, hier in Form einer Druckfeder 9, das radial äußere Hebelende des Hebels 7 mit dem Auflagepunkt A, eine zwischen den beiden Hebelenden des Hebels 7 verlagerbare Rolleneinheit 8 mit dem Auflagepunkt B und der am radial inneren Hebelende am Einrücklager 12 anliegenden Auflagepunkt C im Wesentlichen auf einer Wirklinie. Die Reibungskupplung 2 wird betätigt, indem die Rolleneinheit 8 verlagert wird, woraus entgegen der Kraft der Druckfeder 9 der Hebel 7 am Auflagepunkt C verlagert wird. Im gezeigten Ausführungsbeispiel ist die Reibungskupplung 2 geöffnet, demzufolge fallen bei radialäußerer Position der Rolleneinheit die Auflagepunkte A und B zusammen. Zum Schließen der Reibungskupplung 2 läuft die verlagerbare Rolleneinheit 8 auf einer im Wesentlichen radialen Teilfläche des Hebels 7 unter Abstützung auf einer Grundplatte oder auf der Getriebegehäusewand direkt nach innen. Der Hebel 7 ist in Figur 1 nicht plan dargestellt. Vielmehr ist er aus der Sicht der Rolleneinheit 8 gewissermaßen konkav geformt, wodurch die Kraftentfaltung am Betätigungshebel 10 und damit an den Reibflächen der Reibungskupplung angepasst werden kann. Die Rolleneinheit 8 besteht aus mehreren Laufrollen, die aus Gründen der Laufrichtung einerseits auf der Oberfläche des Hebels 7 und andererseits auf der Grundplatte abrollen.

An der in Figur 1 gezeigten Position der Rolleneinheit 8 bzw. des Auflagepunktes B wirkt die Spannkraft des Energiespeichers 9 auf einer Hebellänge, die gleich null ist. Deshalb kann kein Moment des Hebels 7 auf das Einrücklager 12 wirken. Wird nun die Rolleneinheit 8 radial zum Einrücklager 12 hin bewegt, so nimmt die Hebellänge zwischen dem Energiespeicher 9 und dem Drehpunkt 8 immer weiter zu. Gleichzeitig verkürzt sich die Hebellänge des mit der Rolleneinheit 8 mitgeführten Auflagepunktes B bis zum Auflagepunkt C am Einrücklager 12. Durch das Verlagern des Auflagepunktes B wird eine Kraftveränderung auf das Einrücklager 12 bewirkt, wodurch die Einrückkraft größer wird, je näher der Auflagepunkt B an das Einrücklager 12 heranrückt. In umgekehrter Weise wird durch die Kraftverhältnisse bewirkt, dass bei Ausbleiben einer Kraft auf die Rolleneinheit 8 diese nach radial außen vom Einrücklager 12 wegbewegt wird, so dass die Reibungskupplung 2 wieder ausgerückt wird. Dadurch kann in einfacher Weise eine selbstöffnende Wirkung der Reibungskupplung 2 erzielt werden. Insbesondere im Einsatz bei Doppelkupplung ist dieser Effekt besonders vorteilhaft.

Beispielsweise infolge von Verschleiß in den Reibbelägen der Kupplungsscheibe 5 oder Setzverlusten der Belagfederung zwischen Reibbelägen und der Kupplungsscheibe ist der axiale Abstand zwischen Druckplatte 3 und Gegendruckplatte 6 über die Betriebsdauer der Reibungskupplung 2 Veränderungen unterworfen, die sich unter anderem in einer Verlängerung des Einrückwegs des Betätigungshebels 10 bemerkbar machen. Derartige Änderungen des Einrückweges machen sich in der Auslegung des Betätigungssystems negativ bemerkbar, da die Bauteile und die in der Reibungskupplung und im Betätigungssystem auftretenden Kräfte auf diese Änderungen über Lebensdauer ausgelegt werden müssen. In der Reibungskupplung 2 ist daher eine Nachstelleinrichtung 14 vorgesehen, die einen dem Fehlabstand zwischen Druckplatte 3 und Gegendruckplatte 6 entsprechenden Ausgleich zwischen Kupplungsdeckel 4 und Betätigungshebel 10 einstellt, indem zwischen diesen Teilen in Umfangsrichtung sich erhebende Rampen durch Verdrehen einen axialen Abstand erhöhen. Im nicht nachstellenden Zustand der Kupplung sind diese Rampen beispielsweise durch Reibung oder Formschluss bezüglich einer Verdrehung in Umfangsrichtung und damit bezüglich eines ungewollten Nachstellens gehemmt. Wird der Betätigungshebel 10 über ein vorherbestimmtes Maß in Ausrückrichtung bewegt, hebt dieser von der Nachstelleinrichtung 14 ab und die Rampen der Nachstelleinrichtung können - beispielsweise von einer Federeinrichtung unterstützt - solange in Umfangsrichtung verdreht werden, bis sie den durch den Überweg des Betätigungshebels 10 entstandenen Abstand, der idealerweise dem Fehlabstand entspricht, ausgeglichen haben. Es versteht sich, dass andere vorteilhafte Nachstelleinrichtungen - wie beispielsweise die oben beschriebene Nachstelleinrichtung mit einer federbelasteten Schnecke, die bei jedem Nachstellen nur einen begrenzten Einrückweg kompensiert, - ebenfalls vorteilhaft sein kann, insbesondere wenn vermieden werden soll, dass zu große Nachstellwege eingestellt werden.

Von entscheidender Bedeutung für eine korrekte Nachstellung ist daher die Einstellung eines korrekten Überwegs. Der Hebeleinrücker 11 ist daher so ausgestaltet, dass dessen Hebel 7 selbsttätig, beispielsweise federbelastet, oder von einem Aktor, beispielsweise einem Elektromotor, angetrieben in eine Nulllage bei geöffneter Reibungskupplung 2 zurückkehrt, die im nicht nachstellenden Zustand durch einen gehäusefesten Anschlag 15 gebildet wird, auf dem zusätzlich ein schaltbarer Anschlag 16 angeordnet ist. Die axiale Positionierung beider Anschläge ist so ausgelegt, dass keine Nachstellung erfolgt. Wird in Folge eines verlängerten axialen Einrückweges festgestellt, dass eine Nachstellung erforderlich ist, wird der schaltbare Anschlag 6 aus dem Axialweg des Hebels 7 entfernt, so dass dieser einen weiteren, über die Nulllage hinausgehenden Überweg beschreiten kann, der zur einer exakten Nachstellung an der Nachstelleinrichtung 14 führt. Die Nachstellung kommt in vorteilhafter Weise entweder durch selbständiges Überschreiten des verlängerten Weges zustande oder durch eine Steuerung des Hebeleinrückers 11 durch eine Steuerung, die eine Nachstellung durch einen gesteuerten Überweg initiiert, beispielsweise wenn ein erhöhter Kupplungsweg erkannt oder indem andere Größen wie beispielsweise eine vorgegebene Fahrleistung, eine aufintegrierte Leistungsübertragung über die Reibungskupplung, ein Betriebsintervall oder dergleichen entsprechend ausgewertet werden. Weitergehende Ausführungen, wie ein schaltbarer Anschlag selbsttätig schaltend ausgeführt werden kann, werden in den nachfolgenden Figuren beschrieben.

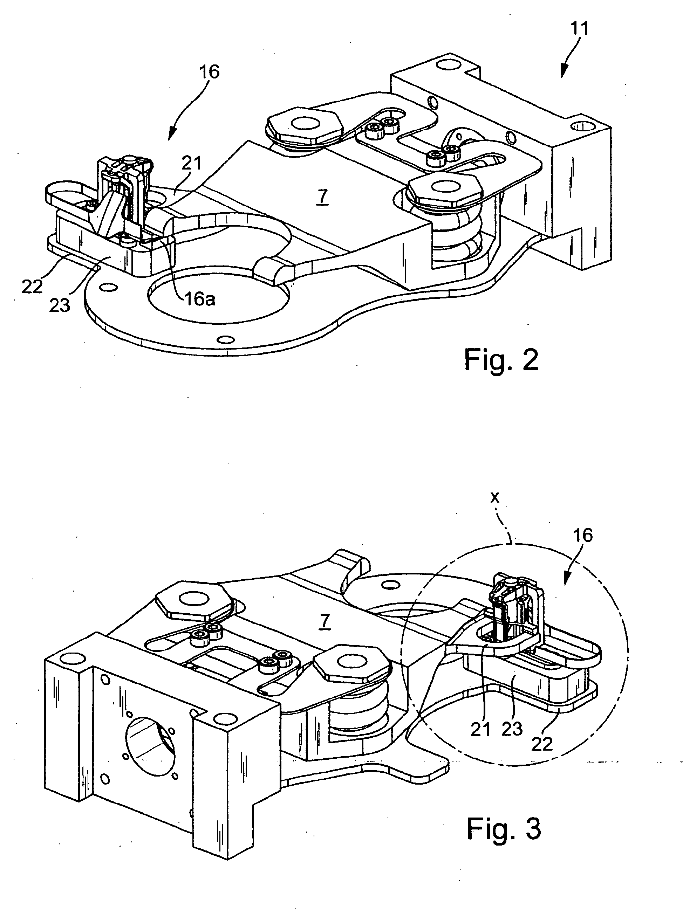

Die Figuren 2 und 3 zeigen eine Betätigungseinrichtung für eine zugedrückte Reibungskupplung in Form eines Hebeleinrückers 11 mit einem axial verlagerbaren Hebel 7 jeweils in Vorder- und Rückansicht. Dem Hebel 7 ist ein schaltbarer Anschlag 16 zugeordnet, der - wie unter Figur 1 beschrieben - einen Überweg des Hebels 7 abhängig davon, ob eine Nachstellung erfolgen soll, einstellt. Zur Übertragung der Betätigungsbewegung auf den schaltbaren Anschlag 16 weist der Hebel 7 einen Fortsatz 21 auf, der in den schaltbaren Anschlag 16 eingreift. Der schaltbare Anschlag 16 ist auf dem Getriebegehäuse oder- wie dargestellt - auf einer Grundplatte 22 des Hebeleinrückers 11 aufgenommen. Während eines Nachstellvorgangs wird der Überweg eingestellt, indem das während des normalen Kupplungsbetriebs als Anschlag dienende Unterlegstück 16a im Nachstellbetrieb verschwenkt wird und der Hebel 7 dann weiter in Richtung Grundplatte 22 zurückgefahren wird, wodurch ein Nachstellvorgang in der Reibungskupplung eingeleitet wird. Zum Ausgleich eines zwischen Grundplatte 22 und dem Unterlegstück 16a bestehenden Abstands kann ein Distanzstück 23 vorgesehen sein, das zugleich im Falle der Nachstellung den Anschlag für den Hebel 7 bilden kann.

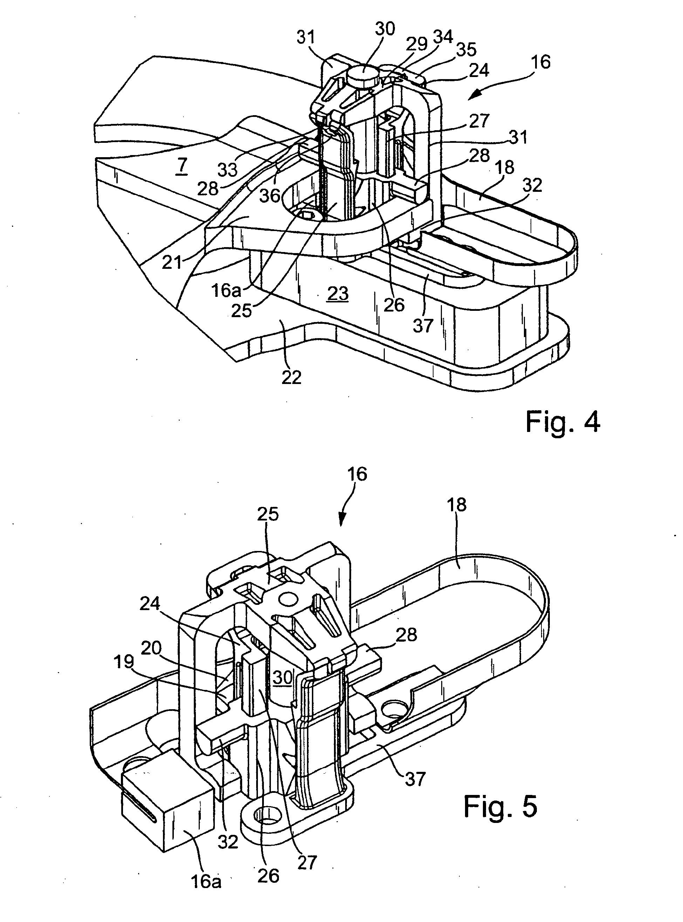

Das mit X bezeichnete Detail wird in der Figur 4 näher erläutert. Der schaltbare Anschlag 16 besteht aus jeweils ortsfest - hier auf dem Distanzstück 23 mittels eines mehrere Bauteile gemeinsam aufnehmenden Tragteils 37 - aufgenommenen Bauteilen, nämlich dem Führungselement 24, dem Rastierelement 25, sowie dem gesteuerten Bauteil 18, das das Unterlegstück 16a aufnimmt. Der Schlitten 26 ist mittels einer am Führungselement 24 vorgesehenen axial in Bewegungsrichtung des Hebels 7 verlaufenden Führung 27 entlang der Axialbewegung des Hebels 7 verlagerbar und wird dabei vom Hebel 7 mitgenommen. Hierzu weist der Schlitten 26 auskragende Arme 28 auf, die - entsprechend ausgeformt - auf den Oberflächen des am Hebel 7 angebrachten, gabelförmigen Fortsatzes 21 abrollen.

Im offenen Zustand der Reibungskupplung, das heißt bei auf dem Unterlegstück 16a aufliegendem Hebel 7, liegt an den der ortsfesten Aufnahme entgegengesetzten Enden des Führungselements 24 und des Rastierelements 25 das Rückstellelement 29 auf. Mittels der Eingreifprofile 33, 34 tritt das Rückstellelement 29 mit entsprechenden komplementären rampenartigen Gegenprofilen 35, 36 in Kontakt und spreizt Rastierelement 25 und Führungselement 24 während eines weiter unten funktionell beschriebenen Rückstellvorgangs. Hierzu ist das Rückstellelement 29 axial begrenzt verlagerbar ortsfest mittels eines Dorns 30 aufgenommen. Eine begrenzt verschwenkbare Aufnahme des Dorns 30 auf dem Distanzteil sorgt dafür, dass sich bei einer biegeweichen Ausgestaltung von Rastierelement 25 und Führungselement 24 unter Schwingungseinfluss gleichsinnig verlagern können und somit der Schlitten 26 auch unter Schwingungseinfluss zuverlässig in Kontakt mit dem Rastierelement 25 einerseits und dem gesteuerten Teil 18 andererseits bleibt. Das Rastierelement 25 weist zwei in Richtung Grundplatte 22 weisende Arme 31 auf, die an ihrem Ende abgewinkelt sind und jeweils eine Auflage 32 für den Fortsatz 21 bilden, so dass sich das Rastierelement 25 zumindest indirekt am Hebel 7 abstützt. Zwischen dem Schlitten 26 und dem Rastierelement 25 ist ein - in dieser Figur nicht ersichtlicher - Energiespeicher wirksam, der einerseits den Schlitten 26 mit dem Fortsatz 21 und daher auch das Rastierelement 25 über die Auflagen 32 mit dem Fortsatz 21 verspannt.

Figur 5 zeigt denselben schaltbaren Anschlag 16 in leicht verdrehter Ansicht, so dass die Ausgestaltung des gesteuerten Bauteils 18 mit daran befestigtem Unterlegstück 16a deutlich wird. Der zum Hebel 7 (Figur 4) gehörige und zwischen den Armen 28 des Schlittens 26 und den Auflagen 32 des Rastierelements 25 verspannte Fortsatz 21 (Figur 4) ist aus Gründen der Übersicht nicht dargestellt. Das gesteuerte Bauteil 18 ist als im Wesentlichen U-förmige Blattfeder ausgebildet, wobei ein Ende ortsfest an der Grundplatte der Betätigungseinrichtung oder dem mehrere Bauteile des schaltbaren Anschlags 16 aufnehmenden Tragteil 37, das wiederum mit der Grundplatte oder dem Distanzstück 23 (Figur 4) verbunden sein kann, befestigt ist und das andere das Unterlegstück 16a trägt. Durch die Vorspannung der Blattfeder liegt diese unter Einstellung einer Rückstellkraft an der am Schlitten 26 vorgesehenen Rampe 19 mit einer am gesteuerten Teil 18 vorgesehenen Gegenrampe 20 an. Die Führung des Schlittens 26 am Führungselement 24 erfolgt mittels Führungen 27, die beidseits des Dorns 30, der auf dem Tragteil 37 axial verlager- und verschwenkbar im begrenztem Umfang ist, angeordnet sind. Das Tragteil 37 kann einstückig das Rastierelement 25 und das Führungselement 24 enthalten, wobei das gesamte Bauteil aus Blech gestanzt sein und die beiden Elemente durch entsprechendes Verkanten dargestellt werden. Weitere Anformungen wie Rampen und Nasen können über Metallumformungen dargestellt sein. Es versteht sich, dass die Herstellung in einem einzigen Stanz- und Umformungsprozess werkzeugfallende Teile beinhalten kann. Weiterhin kann das die Bauelemente einstückig bildende Tragteil 37 partiell oder vollständig gehärtet sein.

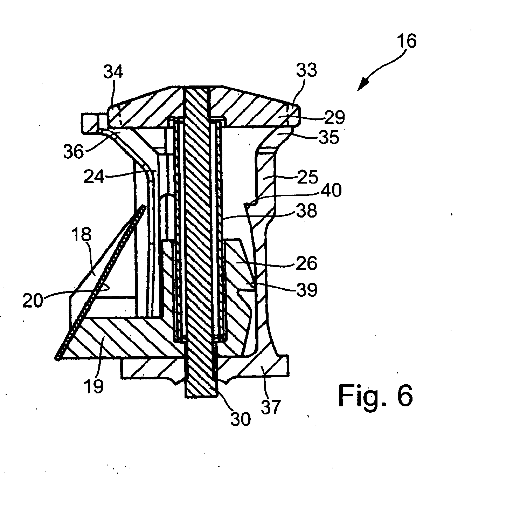

Die Funktion des schaltbaren Anschlags 16 wird anhand des in Figur 6 gezeigten Schnitts näher erläutert. Die nicht dargestellten Bauteile mit ihren entsprechenden Bezugszeichen sind dabei der vorhergehenden Figuren 4 zu entnehmen. Bei einer Verlagerung des Schlittens 26 bei einer Verlagerung des Hebels 7 durch Mitnahme der Arme 28 des Schlittens 26 gleitet die Rampe 19 auf der Gegenrampe 20 entlang und verlagert das gesteuerte Bauteil 18, das infolge dessen Eigenschaft als Blattfeder unter Vorspannung an der Rampe 19 anliegt, senkrecht zur Bewegungsrichtung. Das gesteuerte Bauteil 18 trägt das Unterlegstück 16a, so dass dieses bei jedem Betätigungsyorgang des Hebels 7 aus dem Auflagebereich des Hebels 7 ausgeschwenkt wird. Solange der Betätigungsweg im normalen Betriebsbereich der Reibungskupplung nicht überschritten wird, kehrt bei jedem Öffnen der Reibungskupplung der Schlitten infolge der Verspannung des Schlittens 26 gegenüber dem Rückstellelement 29 mittels der Druckfeder 38 zum Tragteil 37 zurück. Entsprechend kehrt auch das Ünterlegstück 16a in seine Ursprungsposition zurück, bevor der Hebel 7 beziehungsweise dessen Fortsatz 21 auf diesem zur Auflage kommt. Wird ein Überweg eingeleitet, weil die Betätigungseinrichtung von deren Steuerung in einen Überweg gesteuert wird oder weil infolge eines Verschleißes ein Überweg entstanden ist, wird der Schlitten so weit axial entlang des Dorns 30 verfahren, bis eine am Schlitten 26 vorgesehene Rastnase 39 in eine im Rastierelement 25 vorgesehene Haltenase 40 einrastet. Durch die Axialbewegung des Schlittens werden Führungselement 24 und Rastierelement 25 gemäß ihrer vorgegebenen Steifigkeit und Elastizität gebogen, so dass der Formschluss zwischen Rastnase 39 und Haltenase 40 unter Vorspannung erfolgt, der bei auftretenden Schwingungen stabil erhalten bleibt, da Rastierelement 25 und Führungselement 24 von den Schwingungen in die gleiche Richtung beschleunigt werden. Wird die Reibungskupplung nach Eintreten des Nachstellzustandes geöffnet, folgt der Schlitten 25 infolge seiner Verblockung nicht dem Hebel 7. Infolgedessen bleibt das ausgeschwenkte gesteuerte Bauteil 18 und damit das Unterlegstück 16a in einer Position, in der das Unterlegstück 16a nicht mehr als Auflage für den Hebel 7 dient. Ein Überweg des Hebels 7 leitet daher eine Nachstellung in der Reibungskupplung ein. Während des Öffnungsvorgangs der Reibungskupplung senkt sich der Hebel 7 auf den schaltbaren Anschlag 16 soweit ab, dass der Fortsatz 21 die Auflagen 32 der Arme 31 des Rückstellelements 29 beaufschlagt. Infolge der Öffnungskraft der Reibungskupplung wird das Rückstellelement an den Armen 31 und entgegen der Verspannkraft der Druckfeder 38 mittels dessen Eingriffsprofilen 33, 34 in die Gegenprofile 35, 36 des Führungselements 24 und des Rastierelements 25 gezogen, wodurch diese gegeneinander gegen ihre eigene Vorspannung gespreizt werden. Dadurch wird der Formschluss zwischen Haltenase 40 und Rastnase 39 gelöst und der Schlitten kehrt unter Vorspannung der Druckfeder 38 in seine Ursprungslage zurück und gibt das gesteuerte Bauteil frei, so dass das Unterlegstück 16a zur Anlage an den noch im Überweg befindlichen Hebel 7 kommt. Erst beim nächsten Einrücken der Reibungskupplung kehrt das Unterlegstück 16a unter der Vorspannung des gesteuerten Bauteils 18 in seine Lage als Auflage für den Hebel 7 zurück.

**Bezugszeichenliste**

| | | | |
|---|---|---|---|
| 1 | Kupplungssystem | 23 | Distanzstück |
| 2 | Reibungskupplung | 24 | Führungselement |
| 3 | Druckplatte | 25 | Rastierelement |
| 4 | Kupplungsdeckel | 26 | Schlitten |
| 5 | Kupplungsscheibe | 27 | Führung |
| 6 | Gegendruckplatte | 28 | Arm |
| 7 | Hebel | 29 | Rückstellelement |
| 8 | Rolleneinheit | 30 | Dorn |
| 9 | Druckfeder | 31 | Arm |
| 10 | Betätigungshebel | 32 | Auflage |
| 11 | Hebeleinrücker | 33 | Eingreifprofil |
| 12 | Einrücklager | 34 | Eingreifprofil |
| 13 | Abstützung | 35 | Gegenprofil |
| 14 | Nachstelleinrichtung | 36 | Gegenprofil |
| 15 | Gehäusefester Anschlag | 37 | Tragteil |
| 16 | Schaltbarer Anschlag | 38 | Druckfeder |
| 16a | Anschlag | 39 | Rastnase |
| 17 | Steuerendes Bauteil | 40 | Haltenase |
| 18 | Gesteuertes Bauteil | A | Auflagepunkt |
| 19 | Rampe | B | Auflagepunkt |
| 20 | Gegenrampe | C | Auflagepunkt |
| 21 | Fortsatz | L | Hebellänge |
| 22 | Grundplatte | | |

## Patentansprüche

1. Reibungskupplung (2) mit einer Betätigungseinrichtung für ein Kraftfahrzeug, die in kraftfreien Zustand ausgerückt und durch Axialverlagerung eines von der Betätigungseinrichtung mittels eines Hebels (7) betätigten Betätigungshebels (10) eingerückt und bei einem über den kraftfreien Zustand hinaus bewegten Überweg einen durch Verschleiß hervorgerufenen axialen Fehlabstand zwischen in der Reibungskupplung (2) vorgesehenen Reibflächen nachstellt **dadurch gekennzeichnet, dass** ein an der Betätigungseinrichtung vorgesehener schaltbarer Anschlag (16) einen Überweg des Hebels (7) freigibt, wenn ein erfasster Einrückweg des Hebels (7) ein vorgegebenes Maß überschreitet, wobei der Hebel (7) im Laufe einer Betätigung ein mit einer Rampe (19) versehenes, ein Unterlegstück (16a) für den Hebel (7) steuerndes Bauteil mitnimmt, das auf ein gesteuertes, mit einer Gegenrampe (20) versehenes, das Unterlegstück (16a) enthaltendes Bauteil (18) in der Weise einwirkt, dass dieses senkrecht zur vom Hebel (7) beschriebenen Axialbewegung bewegt wird, wobei das steuernde Bauteil entlang der Axialbewegung biegeweich aufgenommen ist.

2. Reibungskupplung (2) nach Anspruch 1, **dadurch gekennzeichnet, dass** das steuernde Bauteil durch einen entlang der Axialbewegung verlagerbaren Schlitten (26) gebildet ist, der auf einer senkrecht zur Axialbewegung elastischen Führungselement (24) geführt wird.

3. Reibungskupplung (2) nach Anspruch 2, **dadurch gekennzeichnet, dass** der Schlitten (26) mittels eines Energiespeichers mit dem Hebel (7) verspannt wird und bei einer Verlagerung durch den Hebel (7) mittels einer Rampe (19) und einer korrespondierenden Gegenrampe (20) das gesteuerte Bauteil (18) nach radial außen verlagert und ein gehäusefest angeordnetes, elastisches Rastierelement (25), das den Schlitten (26) während einer Nachstellung in einer entsprechenden Nächstellposition fixiert, nach radial außen biegt.

4. Reibungskupplung (2) nach Anspruch 3, **dadurch gekennzeichnet, dass** der Energie-speicher sich an einem Rückstellelement (29) abstützt, das begrenzt verlagerbar und begrenzt verschwenkbar ortsfest aufgenommen ist.

5. Reibungskupplung (2) nach Anspruch 4, **dadurch gekennzeichnet, dass** das Rückstellelement (29) mit einem begrenzt verlagerbar und begrenzt verschwenkbar ortsfest aufgenommenen Dorn (30) verbunden ist und zwei in Richtung des Dorns (30) ausgerichtete Arme (31) aufweist, die an ihrem unteren Ende abgewinkelt sind und den Hebel (7) hintergreifen.

6. Reibungskupplung (2) nach Anspruch einem der Ansprüche 3 bis 5, **dadurch gekennzeichnet, dass** das Rückstellelement (29) in Abhängigkeit von dessen durch den Hebel (7) bewirkten Axialverlagerung das Führungselement (24) und das Rastierelement (25) spreizt.

## Claims

1. Friction clutch (2) having an actuating device for a motor vehicle, which friction clutch is disengaged in a force-free state and is engaged by axial displacement of an actuating lever (10) actuated by the actuating device via a lever (7), and which friction clutch, in the event of an overtravel movement beyond the force-free state, readjusts a wear-induced incorrect axial spacing between friction surfaces provided in the friction clutch (2), **characterized in that** a switchable stop (16) provided on the actuating device permits an overtravel of the lever (7) if a detected engagement travel of the lever (7) exceeds a predefined magnitude, wherein the lever (7), during the course of an actuation, drives along a component which is provided with a ramp (19) and which controls a backing piece (16a) for the lever (7), said controlling component acting on a controlled component (18), which is provided with a counterpart ramp (20) and which comprises the backing piece (16a), in such a way that said controlled component is moved perpendicular to the axial movement described by the lever (7), wherein the controlling component is held so as to be flexible along the axial movement.

2. Friction clutch (2) according to Claim 1, **characterized in that** the controlling component is formed by a carriage (26) which is displaceable along the axial movement and which is guided on a guide element (24) which is elastic perpendicular to the axial movement.

3. Friction clutch (2) according to Claim 2, **characterized in that** the carriage (26) is braced against the lever (7) by means of an energy store and, during a displacement by the lever (7), by means of a ramp (19) and a corresponding counterpart ramp (20), displaces the controlled component (18) radially outward and radially outwardly bends an elastic detent element (25) which is arranged fixedly with respect to a housing and which, during a readjustment, fixes the carriage (26) in a corresponding readjustment position.

4. Friction clutch (2) according to Claim 3, **characterized in that** the energy store is supported on a restoring element (29) which is held, so as to be displaceable to a limited extent and pivotable to a limited extent, in a positionally fixed manner.

5. Friction clutch (2) according to Claim 4, **characterized in that** the restoring element (29) is connected to a pin (30) which is held, so as to be displaceable to a limited extent and pivotable to a limited extent, in a positionally fixed manner, and said restoring element has two arms (31) which are oriented in the direction of the pin (30) and which, at the lower end thereof, are angled and engage behind the lever (7).

6. Friction clutch (2) according to one of Claims 3 to 5, **characterized in that** the restoring element (29), as a function of its axial displacement effected by the lever (7), spreads the guide element (24) and the detent element (25) apart.

## Revendications

1. Embrayage à friction (2) doté d'un dispositif d'actionnement pour un véhicule automobile, qui est débrayé dans l'état non soumis à une force et qui est embrayé par décalage axial d'un levier d'actionnement (10) actionné par le dispositif d'actionnement au moyen d'un levier (7), et qui, dans le cas d'un dépassement de course au-delà de l'état non soumis à une force, ajuste une distance d'erreur axiale provoquée par l'usure entre des surfaces de friction prévues dans l'embrayage à friction (2), **caractérisé en ce qu'**une butée (16) commutable prévue sur le dispositif d'actionnement libère un dépassement de course du levier (7) lorsqu'une course d'embrayage détectée du levier (7) dépasse une valeur prédéterminée, le levier (7), au cours d'un actionnement, entraînant un composant pourvu d'une rampe (19) et commandant un élément sous-jacent (16a) pour le levier (7), lequel composant agit sur un composant commandé (18), pourvu d'une rampe conjuguée (20), contenant l'élément sous-jacent (16a), de telle manière que celui-ci soit déplacé perpendiculairement au déplacement axial décrit par le levier (7), le composant de commande étant reçu de manière déformable en torsion le long du déplacement axial.

2. Embrayage à friction (2) selon la revendication 1, **caractérisé en ce que** le composant de commande est formé par un chariot (26) déplaçable le long du déplacement axial, lequel est guidé sur un élément de guidage élastique (24) perpendiculaire au déplacement axial.

3. Embrayage à friction (2) selon la revendication 2, **caractérisé en ce que** le chariot (26) est serré au moyen d'un accumulateur d'énergie avec le levier (7) et en cas de décalage par le levier (7) au moyen d'une rampe (19) et d'une rampe conjuguée correspondante (20), déplace le composant commandé (18) radialement vers l'extérieur, et fléchit radialement vers l'extérieur un élément d'encliquetage élastique (25) disposé de manière fixée au boîtier, qui fixe le chariot (26) dans une position de réglage correspondante pendant un réglage.

4. Embrayage à friction (2) selon la revendication 3, **caractérisé en ce que** l'accumulateur d'énergie s'appuie sur un élément de rappel (29), qui est reçu en position fixe de manière déplaçable dans une mesure limitée et de manière à pouvoir pivoter dans une mesure limitée.

5. Embrayage à friction (2) selon la revendication 4, **caractérisé en ce que** l'élément de rappel (29) est connecté à un mandrin (30) reçu en position fixe de manière déplaçable dans une mesure limitée et de manière à pouvoir pivoter dans une mesure limitée, et présente deux bras (31) orientés dans la direction du mandrin (30), qui sont coudés au niveau de leur extrémité inférieure et viennent en prise par l'arrière avec le levier (7).

6. Embrayage à friction (2) selon l'une quelconque des revendications 3 à 5, **caractérisé en ce que** l'élément de rappel (29) écarte l'élément de guidage (24) et l'élément d'encliquetage (25) en fonction de son décalage axial provoqué par le levier (7).
